# EUROPEAN PATENT SPECIFICATION

(11) **EP 3 557 469 B1**
(45) Date of publication and mention of the grant of the patent: **22.06.2022**
(21) Application number: 18168365.7
(22) Date of filing: 20.04.2018
(51) Int. Cl.: G06F 21/60, G06F 21/62, H04L 9/40

(54) **SYSTEM, METHOD AND COMPUTER PROGRAM FOR SECURE DATA EXCHANGE**
SYSTEM, VERFAHREN UND COMPUTERPROGRAMM ZUM SICHEREN DATENAUSTAUSCH
SYSTÈME, PROCÉDÉ ET PROGRAMME INFORMATIQUE POUR UN ÉCHANGE DE DONNÉES SÉCURISÉ

(43) Date of publication of application: 23.10.2019
(73) Proprietor: Rohde & Schwarz GmbH & Co. KG, 81671 München (DE)
(72) Inventor: Quint, Alexander Bruno, Dr., 64665 Alsbach (DE)
(74) Representative: Rupp, Christian

(56) References cited:
- US-A1- 2012 173 655
- US-A1- 2014 351 586

## Description

The invention relates to a system and a method for secure data handling.

Generally, in times of an increasing number of applications processing data, especially encrypted data, with respect to cloud environments, there is a growing need of a system and a method for secure data handling especially in order to protect sensitive data from unauthorized access in an efficient manner.

US 2014/0006540 A1 discloses a cloud or network server based storage and processing system for portable electronic devices including mobile devices and cellular telephones. The server based data, applications and user interface components may overcome limited local storage and processing on mobile devices. Cloud server data may be accessible from multiple mobile devices or applications. Data may be saved to and downloaded from private cloud intranet servers or public cloud Internet servers. A mobile device may access a network server using a central multichannel multiplexing transmit/receive device or access point. In this context, networked data may be secured, whereby authentication may include user names and passwords. As it can be seen, due to the fact that data may exclusively be secured with said authentication, sensitive data is not protected in a highly efficient manner

US 2014/351586 A1 is further prior art.

There is the object to provide a system, a method and a computer program for exchanging data in a secure and efficient manner.

The present invention is defined by the appended independent claims 1, 6 and 11. Preferred embodiments are set forth in the dependent claims. Exemplary embodiments of the invention are now further explained with respect to the drawings by way of example only, and not for limitation. In the drawings:
- Fig. 1: shows an exemplary embodiment of the first aspect of the invention;
- Fig. 2: shows a further exemplary embodiment of the first aspect of the invention with focus on the first data gate;
- Fig. 3: shows an exemplary embodiment of an advanced workflow for handling a virtual file;
- Fig. 4: shows an exemplary embodiment of a definition of a restricted region; and
- Fig. 5: shows a flow chart of an exemplary embodiment of the second aspect of the invention.

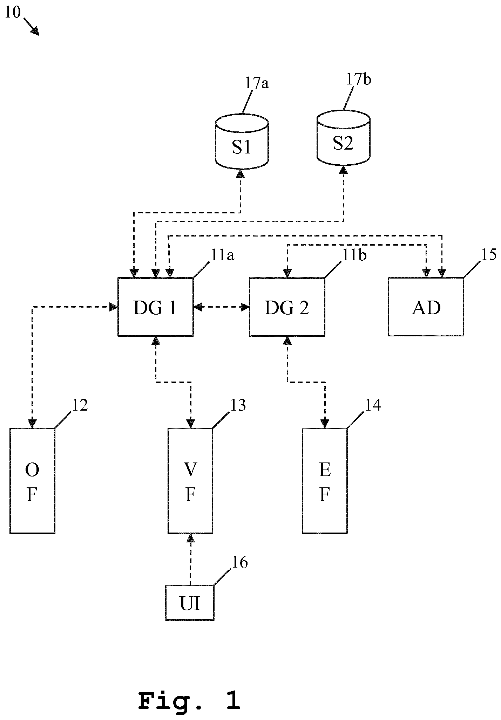

Firstly, Fig. 1 illustrates an exemplary embodiment of an inventive system 10 for secure data exchange. The system 10 comprises at least two data gates, exemplarily a first data gate 11a and a second data gate 11b, authentication data 15, original data, exemplarily the original file 12, and at least one virtual file, exemplarily the virtual file 13, especially comprising meta data of the original data.

In this context, the first data gate 11a is configured to encrypt the original data, especially the original file 12, with a key based on the authentication data 15 and to generate the virtual file 13, whereas the second data gate 11b is configured to assemble and/or decrypt the encrypted original data with the key. In addition to this, the assembly and/or decryption of the encrypted original data or of the original file 12, respectively, is initiated by at least one user input, exemplarily user input 16, with respect to the virtual file 13.

Additionally, it should be mentioned that an user input may be a file opening request or an input action with the aid of an input device. For instance, said input action may advantageously be a keyboard input or a mouse input, preferably a double-click with the aid of a mouse.

It is noted that it might be particularly advantageous if the first data gate 11a is further configured to add security data to the virtual file 13.

Furthermore, the first data gate 11a and the second data gate 11b may advantageously comprise synchronized authentication data of involved users.

Moreover, the encrypted original data and/or the virtual file 13 are stored in at least one public data storage. As it can be seen from Fig. 1, for this purpose, the system 10 further comprises exemplarily two data storages 17a and 17b.

It should further be noted that it might be particularly advantageous if the authentication data 15 is organized in groups.

In addition to this, the first data gate 11a may further be configured to separate the encrypted original data in a plurality of packets. In this context, it might be particularly advantageous if the first data gate 11a is further configured to spread the plurality of packets over at least two public data storages, exemplarily the data storages 17a and 17b.

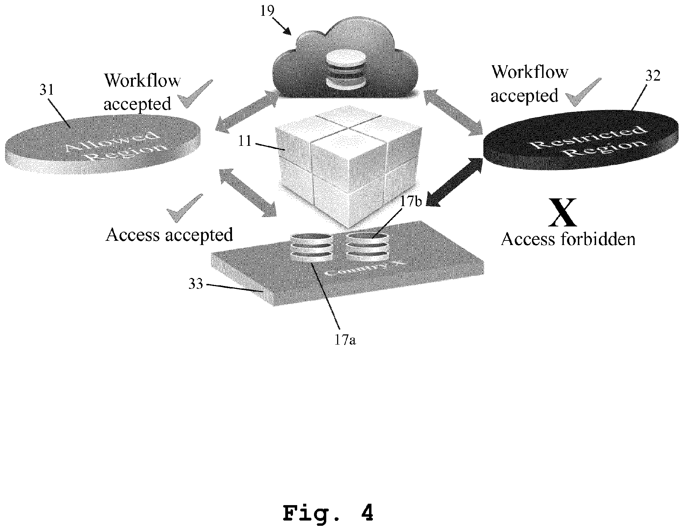

In this context, it should be mentioned that it might be particularly advantageous to store the encrypted file 14 in predefined restricted regions with respect to the at least one of the data storages 17a and 17b, which will be shown in greater detail with the aid of Fig. 4.

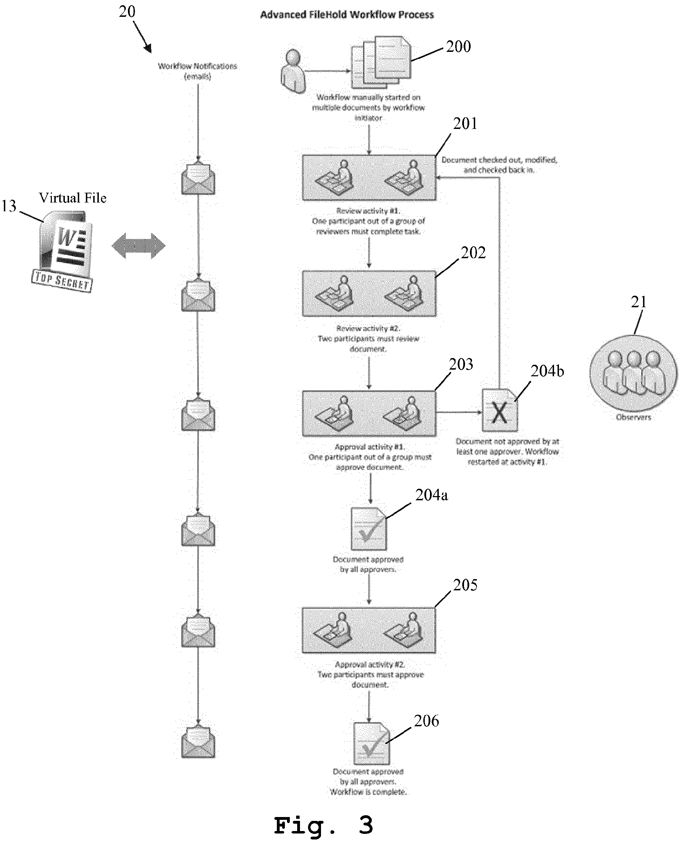

Additionally or alternatively, at least one of the data storages 17a, 17b may be configured to manage handling of the virtual file 13 in workflows, which will be shown in greater detail according to Fig. 3.

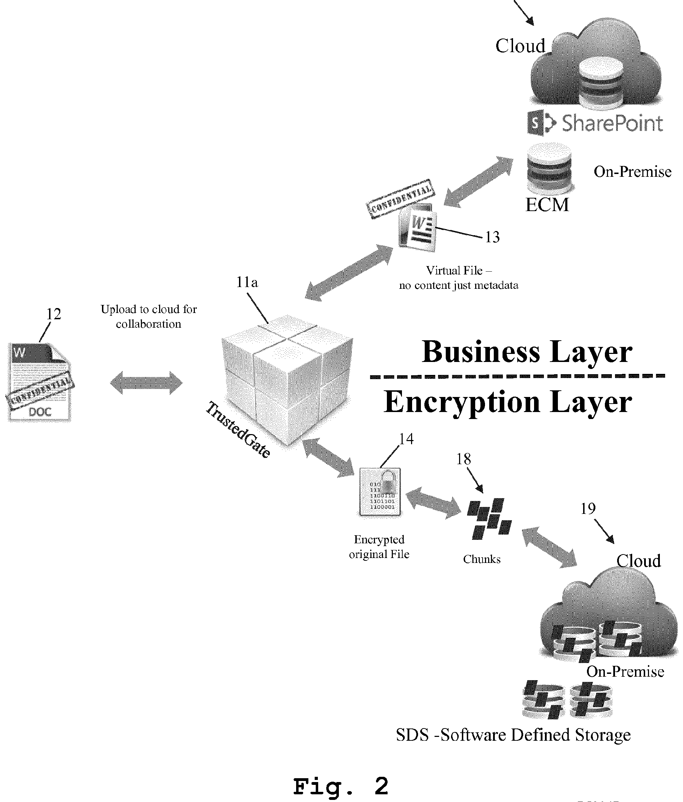

Now, with respect to Fig. 2, Fig. 2, a further exemplary embodiment of the inventive system with focus on the first data gate 11a is illustrated. As it can be seen, a majority of the elements of said system have the same reference signs as in Fig. 1. Due to the fact that these elements have already been described with respect to Fig. 1, the respective elements will not completely be described again in the context with Fig. 2.

From Fig. 2, it is evident that the original file 12, exemplarily a confidential file, is uploaded to a cloud environment especially for collaboration. In this context, the virtual file 13, especially comprising exclusively meta data, is stored to a data storage 17. Said data storage 17 may comprise a cloud storage, a share point, an on-premise storage, an ECM (Enterprise Content Management) storage, or any combination thereof.

Furthermore, the encrypted file 14, especially the encrypted original file, is divided into a plurality of chunks 18. Said plurality of chunks 18 is spread over a plurality of storage mediums of the data storage 19. Said data storage 19 may comprise a cloud storage, an on-premise storage, a software-defined storage, or any combination thereof.

As it can further be seen from Fig. 2, the architecture of the inventive system for secure data handling can advantageously be divided into two major layers: a business layer especially comprising the virtual file 13 and the storage thereof, and an encryption layer especially comprising the encrypted file 14, said plurality of chunks 18 of the encrypted file 14, and the storage thereof.

As already announced above within the scope of Fig. 1, Fig. 3 depicts an exemplary embodiment of an advanced workflow for handling a virtual file. It is noted that the shown workflow process optionally comprises workflow notifications 20, preferably in the form of emails, and observers 21.

According to Fig. 3, in a first step 200, a workflow initiator manually starts the workflow on multiple documents. Then, in a second step 201, as a first review activity, one participant out of a group of reviewers has to complete the respective task.

In addition to this, in a third step 202, as a second review activity, two participants have to review the respective document. Furthermore, in a fourth step 203, as a first approval activity, one participant out of a group has to approve the respective document.

As it can be seen, if the respective document is not approved by at least one approver (step 204b), the workflow is restarted at the above-mentioned first review activity or the second step 201, respectively.

Otherwise, if the respective document has been approved by all approvers according to step 204a, two participants have to approve the respective document according to step 205 or the second approval activity, respectively. Finally, in accordance with step 206, the respective document has been approved by all approvers, which leads to the fact that the workflow is complete.

Moreover, as already announced above with respect to the data storages 17a, 17b of Fig. 1, Fig. 4 illustrates an exemplary embodiment of a definition of a restricted region. As it can be seen, some of the elements of said Fig. 4 have the same reference signs as in the foregoing figures. Due to the fact that these elements have already been described with respect to foregoing figures, the respective elements will not completely be described again in the context with Fig. 4.

In this context, the data gate 11, preferably being equal to at least one of the first data gate 11a and the second data gate 11b, is especially configured to store the encrypted file 14 (not shown) in predefined restricted regions with respect to the available data storages 19, preferably being equal to at least one of the data storages 17a, 17b. In this manner, the risk of data theft can advantageously be reduced.

Fig. 4 exemplarily depicts an allowed region 31, a restricted region 32, a data storage 17, especially a cloud storage, preferably being equal to at least one of the data storages 17a, 17b, and a certain country 33, especially Country X, comprising the two data storages 17a, 17b. In addition to this or as an alternative, Country X may especially comprise data storage 17 or 19.

Whereas between Country X and the allowed region 31, access is exemplarily accepted, access is forbidden between Country X and the restricted region 32. In addition to this, it is noted that whereas between the allowed region 31 and the cloud environment especially comprising the data storage 17, a workflow is accepted, the respective workflow between the cloud environment and the restricted region 32 is advantageously also accepted even though said region 32 is restricted.

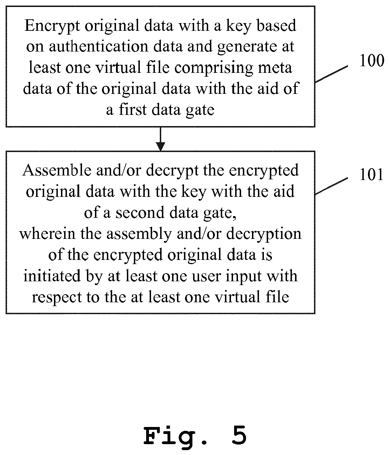

Finally, Fig. 5 shows a flow chart of an exemplary embodiment of the inventive method for secure data exchange. In a first step 100, original data is encrypted with a key based on authentication data and at least one virtual file comprising meta data of the original data is generated with the aid of a first data gate. Then, in a second step 101 the encrypted original data is assembled and/or decrypted with the key with the aid of a second data gate. In this context, the assembly and/or decryption of the encrypted original data is initiated by at least one user input with respect to the at least one virtual file.

In addition to this, the method may further comprise the step of adding security data to the at least one virtual file.

Furthermore, it might be particularly advantageous if the first data gate and the second data gate comprise synchronized authentication data of involved users.

Additionally or alternatively, the encrypted original data and/or the at least one virtual file may be stored in at least one public data storage.

It is further noted that it might be advantageous if the authentication data is organized in groups.

Moreover, the method may further comprise the step of separating the encrypted original data in a plurality of packets.

In addition to this, the method may further comprise the step of spreading the plurality of packets over at least two public data storages.

While various embodiments of the present invention have been described above, it should be understood that they have been presented by way of example only, and not limitation. The scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings.

## Claims

1. A system (10) for secure data exchange, the system (10) comprising:
at least two data gates (11a, 11b),
wherein a first data gate (11a) of the at least two data gates (11a, 11b) is configured to encrypt original data (12) with a key based on authentication data (15) and to generate at least one virtual file (13) comprising exclusively meta data of the original data (12),
wherein the first data gate (11a) is further configured to separate the encrypted original data (14) in a plurality of packets (18),
wherein the first data gate (11a) is further configured to spread the plurality of packets (18) over at least two public data storages (17, 17a, 17b, 19),
wherein a second data gate (11b) of the at least two data gates (11a, 11b) is configured to assemble and decrypt the encrypted original data (14) with the key, and
wherein the assembly and decryption of the encrypted original data (14) is initiated by at least one user input (16) with respect to the at least one virtual file (13).

2. The system (10) according to claim 1,
wherein the first data gate (11a) is further configured to add security data to the at least one virtual file (13).

3. The system (10) according to claim 1 or 2,
wherein the first data gate (11a) and the second data gate (11b) comprise synchronized authentication data of involved users.

4. The system (10) according to any of the claims 1 to 3, wherein the encrypted original data (14) and/or the at least one virtual file (13) are stored in at least one public data storage (17, 17a, 17b, 19).

5. The system (10) according to any of the claims 1 to 4, wherein the authentication data (15) is organized in groups.

6. A method for secure data exchange, the method comprising the steps of:
encrypting original data (12) with a key based on authentication data (15) and generating at least one virtual file (13) comprising exclusively meta data of the original data (12) with the aid of a first data gate (11a),
separating the encrypted original data (14) in a plurality of packets (18),
spreading the plurality of packets (18) over at least two public data storages (17, 17a, 17b, 19), and
assembling and decrypting the encrypted original data (14) with the key with the aid of a second data gate (11b), wherein the assembly and decryption of the encrypted original data (14) is initiated by at least one user input (16) with respect to the at least one virtual file (13).

7. The method according to claim 6,
wherein the method further comprises the step of adding security data to the at least one virtual file (13).

8. The method according to claim 6 or 7,
wherein the first data gate (11a) and the second data gate (11b) comprise synchronized authentication data of involved users.

9. The method according to any of the claims 6 to 8, wherein the encrypted original data (14) and/or the at least one virtual file (13) are stored in at least one public data storage (17, 17a, 17b, 19).

10. The method according to any of the claims 6 to 9, wherein the authentication data (15) is organized in groups.

11. A computer program comprising instructions which, when the program is executed by a computer, cause the computer to carry out the method of any of claims 6 to 10.

## Patentansprüche

1. System (10) für einen sicheren Datenaustausch, wobei das System (10) Folgendes umfasst:
mindestens zwei Datentore (11a, 11b),
wobei ein erstes Datentor (11a) der mindestens zwei Datentore (11a, 11b) dazu ausgelegt ist, Originaldaten (12) auf Basis von Authentifizierungsdaten (15) mit einem Schlüssel zu verschlüsseln und mindestens eine virtuelle Datei (13) zu erzeugen, die ausschließlich Metadaten der Originaldaten (12) umfasst,
wobei das erste Datentor (11a) ferner dazu ausgelegt ist, die verschlüsselten Originaldaten (14) in eine Vielzahl von Paketen (18) zu trennen,
wobei das erste Datentor (11a) ferner dazu ausgelegt ist, die Vielzahl von Paketen (18) über mindestens zwei öffentliche Datenspeicher (17, 17a, 17b, 19) zu verteilen,
wobei ein zweites Datentor (11b) der mindestens zwei Datentore (11a, 11b) dazu ausgelegt ist, die verschlüsselten Originaldaten (14) zu assemblieren und mit dem Schlüssel zu entschlüsseln, und
wobei die Assemblierung und Entschlüsselung der verschlüsselten Originaldaten (14) mit Bezug auf die mindestens eine virtuelle Datei (13) durch mindestens eine Benutzereingabe (16) initiiert wird.

2. System (10) nach Anspruch 1,
wobei das erste Datentor (11a) ferner dazu ausgelegt ist, Sicherheitsdaten zu der mindestens einen virtuellen Datei (13) hinzuzufügen.

3. System (10) nach Anspruch 1 oder 2,
wobei das erste Datentor (11a) und das zweite Datentor (11b) synchronisierte Authentifizierungsdaten von beteiligten Benutzern umfassen.

4. System (10) nach einem der Ansprüche 1 bis 3,
wobei die verschlüsselten Originaldaten (14) und/oder die mindestens eine virtuelle Datei (13) in mindestens einem öffentlichen Datenspeicher (17, 17a, 17b, 19) gespeichert werden.

5. System (10) nach einem der Ansprüche 1 bis 4,
wobei die Authentifizierungsdaten (15) in Gruppen organisiert sind.

6. Verfahren für einen sicheren Datenaustausch, wobei das Verfahren die folgenden Schritte umfasst:
Verschlüsseln von Originaldaten (12) mit einem Schlüssel auf Basis von Authentifizierungsdaten (15) und Erzeugen von mindestens einer virtuellen Datei (13), die ausschließlich Metadaten der Originaldaten (12) umfasst, mithilfe eines ersten Datentors (11a),
Trennen der verschlüsselten Originaldaten (14) in eine Vielzahl von Paketen (18),
Verteilen der Vielzahl von Paketen (18) über mindestens zwei öffentliche Datenspeicher (17, 17a, 17b, 19), und
Assemblieren und Entschlüsseln der verschlüsselten Originaldaten (14) mit dem Schlüssel mithilfe eines zweiten Datentors (11b), wobei die Assemblierung und Entschlüsselung der verschlüsselten Originaldaten (14) mit Bezug auf die mindestens eine virtuelle Datei (13) durch mindestens eine Benutzereingabe (16) initiiert wird.

7. Verfahren nach Anspruch 6,
wobei das Verfahren ferner den Schritt des Hinzufügens von Sicherheitsdaten zu der mindestens einen virtuellen Datei (13) umfasst.

8. Verfahren nach Anspruch 6 oder 7,
wobei das erste Datentor (11a) und das zweite Datentor (11b) synchronisierte Authentifizierungsdaten von beteiligten Benutzern umfassen.

9. Verfahren nach einem der Ansprüche 6 bis 8,
wobei die verschlüsselten Originaldaten (14) und/oder die mindestens eine virtuelle Datei (13) in mindestens einem öffentlichen Datenspeicher (17, 17a, 17b, 19) gespeichert werden.

10. Verfahren nach einem der Ansprüche 6 bis 9,
wobei die Authentifizierungsdaten (15) in Gruppen organisiert sind.

11. Computerprogramm, das Anweisungen umfasst, die, wenn das Programm von einem Computer ausgeführt wird, den Computer veranlassen, das Verfahren nach einem der Ansprüche 6 bis 10 umzusetzen.

## Revendications

1. Système (10) pour un échange de données sécurisé, le système (10) comprenant :
au moins deux portes de données (11a, 11b),
dans lequel une première porte de données (11a) des au moins deux portes de données (11a, 11b) est configurée pour chiffrer des données d'origine (12) avec une clé basée sur des données d'authentification (15) et pour générer au moins un fichier virtuel (13) comprenant exclusivement des méta données des données d'origine (12),
dans lequel la première porte de données (11a) est en outre configurée pour séparer les données d'origine chiffrées (14) dans une pluralité de paquets (18),
dans lequel la première porte de données (11a) est en outre configurée pour étaler la pluralité de paquets (18) sur au moins deux stockages de données publics (17, 17a, 17b, 19),
dans lequel une seconde porte de données (11b) des au moins deux portes de données (11a, 11b) est configurée pour assembler et déchiffrer les données d'origine chiffrées (14) avec la clé, et
dans lequel l'assemblage et le déchiffrement des données d'origine chiffrées (14) est initié par au moins un entrée d'utilisateur (16) par rapport à l'au moins un fichier virtuel (13) .

2. Système (10) selon la revendication 1,
dans lequel la première porte de données (11a) est en outre configurée pour ajouter des données de sécurité à l'au moins un fichier virtuel (13).

3. Système (10) selon la revendication 1 ou 2,
dans lequel la première porte de données (11a) et la seconde porte de données (11b) comprennent des données d'authentification synchronisées d'utilisateurs impliqués.

4. Système (10) selon l'une quelconque des revendications 1 à 3, dans lequel les données d'origine chiffrées (14) et/ou l'au moins un fichier virtuel (13) sont stockés dans au moins un stockage de données public (17, 17a, 17b, 19).

5. Système (10) selon l'une quelconque des revendications 1 à 4, dans lequel les données d'authentification (15) sont organisées en groupes.

6. Procédé pour un échange de données sécurisé, le procédé comprenant les étapes consistant à :
chiffrer des données d'origine (12) avec une clé basée sur des données d'authentification (15) et générer au moins un fichier virtuel (13) comprenant exclusivement des méta données des données d'origine (12) à l'aide d'une première porte de données (11a),
séparer les données d'origine chiffrées (14) dans une pluralité de paquets (18),
étaler la pluralité de paquets (18) sur au moins deux stockages de données publics (17, 17a, 17b, 19), et
assembler et déchiffrer les données d'origine chiffrées (14) avec la clé à l'aide d'une seconde porte de données (11b), dans lequel l'assemblage et le déchiffrement des données d'origine chiffrées (14) est initié par au moins une entrée d'utilisateur (16) par rapport à l'au moins un fichier virtuel (13).

7. Procédé selon la revendication 6,
dans lequel le procédé comprend en outre l'étape consistant à ajouter des données de sécurité à l'au moins un fichier virtuel (13).

8. Procédé selon la revendication 6 ou 7,
dans lequel la première porte de données (11a) et la seconde porte de données (11b) comprennent des données d'authentification synchronisées d'utilisateurs impliqués.

9. Procédé selon l'une quelconque des revendications 6 à 8, dans lequel les données d'origine chiffrées (14) et/ou l'au moins un fichier virtuel (13) sont stockés dans au moins un stockage de données public (17, 17a, 17b, 19).

10. Procédé selon l'une quelconque des revendications 6 à 9, dans lequel les données d'authentification (15) sont organisées en groupes.

11. Programme informatique comprenant des instructions qui, lorsque le programme est exécuté par un ordinateur, amènent l'ordinateur à réaliser le procédé de l'une quelconque des revendications 6 à 10.
